# FASCICULE DE BREVET EUROPEEN

(11) **EP 1 244 542 B1**
(45) Date de publication et mention de la délivrance du brevet: **18.06.2003**
(21) Numéro de dépôt: 00993595.8
(22) Date de dépôt: 22.12.2000
(51) Int. Cl.: B29C 65/20

(54) **PROCEDE ET APPAREIL POUR LA CONNEXION STERILE DE DEUX TUBES SOUPLES**
VERFAHREN UND VORRICHTUNG ZUR STERILEN VERBINDUNG ZWEIER FLEXIBLER RÖHREN
METHOD AND APPARATUS FOR STERILE CONNECTION BETWEEN TWO FLEXIBLE TUBES

(30) Priorité: 24.12.1999 FR 9916802
(43) Date de publication de la demande: 02.10.2002
(73) Titulaire: Aventis Pasteur, 69007 Lyon (FR)
(72) Inventeur: BARADON, Jean-François, F-69005 Lyon (FR); MELLINGER, Pierre, François, Léon, F-69210 Eveux (FR); THOINET, Michel, F-69003 Lyon (FR)
(74) Mandataire: Kerneis, Danièle
(86) Numéro de dépôt international: FR0003678
(87) Numéro de publication internationale: WO01047692

(56) Documents cités:
- EP-A- 0 105 587
- EP-A- 0 483 478
- EP-A- 0 571 978
- EP-A- 0 623 450
- AU-B- 407 981
- CH-A- 375 516
- FR-A- 2 598 653
- US-A- 4 793 880

## Description

L'invention est relative à un procédé et à un appareil pour la connexion stérile de deux tubes souples.

Pour transférer un fluide contenu dans un conteneur donneur, de volume quelconque, vers un autre conteneur ou récipient receveur, dans un environnement non stérile ou dans un environnement ne devant pas être contaminé par le fluide transféré, il est connu de connecter bout à bout les tubes souples en matière thermoplastique équipant le conteneur donneur et le récipient receveur. Cette connexion s'effectue en sectionnant les tubes à assembler, préalablement obturés s'ils ne l'étaient pas, puis en chauffant leur extrémité jusqu'à fusion localisée de leur matière constitutive et enfin en aboutant les deux tubes en exerçant sur eux deux efforts opposés de rapprochement pour obtenir la soudure de leurs extrémités.

Cette connexion, qui fut d'abord réalisée manuellement en chauffant les extrémités des deux tubes sur un bec à gaz, est actuellement effectuée par des appareils automatiques de connexion qui simplifient l'opération tout en réalisant celle-ci dans des conditions stériles, mais qui présentent encore quelques inconvénients, tels qu'encombrement, formation de bourrelets dans le canal axial des tubes connectés, temps de cycle élevé, émission de fumées et bien souvent limitation de l'appareil à des tubes réalisés dans une matière définie et sur une plage de diamètre réduite.

Le document US 4 369 779 décrit un appareil dans lequel les deux tubes souples à connecter sont positionnés, parallèlement l'un à l'autre, dans deux blocs espacés et déplaçables en translation longitudinale, et sont sectionnés par une lame chauffante passant entre les deux blocs. Pendant que la lame est entre les blocs, l'un d'eux est déplacé en translation transversale pour amener le tube qu'il porte dans le prolongement de l'autre tube, puis, tandis que la lame est retirée, l'un des deux blocs est rapproché de l'autre par des moyens à ressorts le faisant pivoter pour assurer le contact des extrémités des tubes, puis leur soudure. Ce dispositif n'est applicable qu'au tube vide ou préalablement vidé de tout liquide, ce qui limite son application. Le serrage d'aboutement par pivotement d'un bloc procure un effort d'aboutement qui n'est pas parfaitement orthogonal à la face en bout des tubes, et qui peut entraîner des irrégularités dans la soudure de connexion.

Le dispositif décrit dans le document US 4 521 263 met en oeuvre une lame chauffante à déplacement vertical disposée sous les tubes, et assure le maintien des tubes, parallèlement l'un à l'autre, au moyen de deux paires espacées de mâchoires. L'une de ces paires de mâchoires est déplaçable, transversalement et longitudinalement, sous le contrôle de cames rotatives, pour assurer les mouvements d'alignement des tubes et d'aboutement de leurs extrémités.

Le document US 4 610 670 ajoute à chacun des appareils décrits ci-dessus des moyens pour assurer l'aplatissement localisé de chaque tube dans la zone entre les blocs ou mâchoires. Cet aplatissement, qui va jusqu'au contact interne de la paroi du tube, présente l'avantage de chasser de la zone de découpage et de soudure le fluide contenu dans l'un des tubes mais aussi, après découpage, d'éviter l'introduction dans les deux tubes de bactéries ou autres agents contaminants. De plus, lors du rapprochement par soudage bout à bout, cet aplatissement des deux extrémités des tubes évite que la matière plastique fondue flue à l'intérieur des tubes en formant un bourrelet pouvant réduire la section de passage dans la zone de connexion et gêner la circulation ultérieure du fluide entre le conteneur donneur et le récipient récepteur.

L'expérience enseigne qu'il s'agit là d'un avantage aléatoire car l'absence de formation de bourrelet dépend de nombreux facteurs, et en particulier de la matière constitutive des tubes, de la quantité de calories apportées à leurs extrémités sectionnées, des conditions de coupe et des conditions d'aboutement.

Le couple matière calories détermine la fluidité de la matière entre la phase de sectionnement par fusion-coupe des tubes et la phase d'enlèvement de la lame et, en conséquence, la qualité de la soudure mais aussi la qualité de la protection de l'intérieur des tubes vis à vis du milieu environnant, par le contact des extrémités coupées et fondues léchant la lame chauffante avant de venir en contact l'une contre l'autre.

Pour une matière définie, présentant des caractéristiques homogènes dans l'épaisseur de la section de tube coupé, des variations de fluidité peuvent provenir des différences d'apport calorifique par la lame chauffante.

En effet, bien souvent celle-ci est constituée par une résistance électrique et a tendance à retenir des résidus ou traces de matière qui adhèrent sur elle au refroidissement. Au réchauffement, ces résidus ou traces réduisent la puissance calorifique de la lame en perturbant l'opération de connexion. Les lames de ce type ont une durée d'utilisation limitée et doivent être fréquemment remplacées, ne serait-ce que pour ne pas charbonner en dégageant des fumées.

Les conditions de coupe sont également importantes car si la coupe n'est pas plane et n'est pas orthogonale à l'axe longitudinal du tube, le glissement de la face coupée sur la lame chauffante, dans la phase d'alignement des tubes, s'effectue dans de mauvaises conditions, ce qui favorise les dépôts sur la lame. Le manque de planéité se ressent également lors de l'aboutement, puisqu'à ce moment, les deux tubes venant en contact, non pas par une surface mais par des excroissances localisées, il se forme temporairement des zones de fuite permettant à la matière pâteuse de s'échapper vers l'extérieur ou vers l'intérieur en formant un bourrelet interne plus ou moins prononcé. Ces défauts de planéité sont en général consécutifs à la déformation de la lame qui, sous l'effet de son chauffage, se dilate de manière aléatoire et perd de sa rectilignité.

Enfin, les conditions d'aboutement, c'est-à-dire les conditions dans lesquelles s'exercent les forces opposées appliquant l'une contre l'autre les deux extrémités des tubes, déterminent le sens des efforts de réaction de la matière et donc le sens des flux de matière, tandis que l'intensité détermine l'importance du débit de matière, et en conséquence, l'importance du ou des bourrelets.

Dans les dispositifs actuels, ces divers paramètres sont bien souvent mal contrôlés, ce qui conduit, de manière aléatoire à des défauts de soudure, de stérilité ou à la formation de bourrelets internes excessifs.

L'objet de l'invention est de fournir un procédé et un dispositif réalisant, en conditions stériles, la connexion bout à bout de deux tubes souples en matière thermoplastique, sans formation de bourrelet intérieur, et cela sur une plage de diamètre importante et avec des tubes en matière diverse.

Le procédé selon l'invention fait partie de ceux comprenant les phases suivantes :
- sectionnement des deux tubes par fusion-coupe au moyen d'une lame chauffante déplacée dans l'intervalle entre deux paires de mâchoires espacées, assurant le positionnement et le maintien des tubes, parallèlement entre eux,
- déplacement relatif entre les paires de mâchoires pour aligner les deux tubes devant être connectés,
- retrait de la lame chauffante,
- et rapprochement des extrémités des tubes l'une vers l'autre pour assurer leur jonction par soudage.

Selon le procédé de l'invention, pendant la phase de sectionnement des tubes par fusion-coupe, on n'exerce aucun effort de rapprochement sur les tubes, et, dès la fin de la phase d'alignement des tubes et pendant la phase de rapprochement de ces tubes, on communique à chacun d'eux un effort longitudinal contrôlé dont la valeur va en décroissant depuis leur appui sur la lame jusqu'à la fin de leur aboutement visqueux.

Ainsi, les efforts opposés d'aboutement des extrémités fondues des deux tubes ont une valeur contrôlée et décroissante qui favorise la liaison par soudure, sans pour autant générer des flux de matière importants et sous une pression insuffisante pour former un bourrelet interne gênant.

Dans une forme de mise en oeuvre préférée du procédé, chacun des tubes est soumis, à la fin de la phase d'alignement, à un effort longitudinal plaquant son extrémité contre la lame chauffante pendant une durée limitée temporisée.

Cette phase permet d'augmenter la quantité de matière en fusion à l'extrémité de chacun des tubes et de favoriser la liaison par soudure ultérieure de ces deux tubes.

Selon une forme particulière de réalisation de l'invention, on assure l'aplatissement des deux tubes préalablement à leur sectionnement, et on exerce, après la jonction par soudage des extrémités des deux tubes, sur le tube ainsi obtenu, une pression perpendiculaire à sa zone d'aplatissement en vue de la reprise de la forme initiale.

L'invention concerne également un appareil pour la connexion stérile de deux tubes souples comprenant :
- deux paires espacées de mâchoires avec des moyens positionnant, parallèlement, les deux tubes à assembler,
- des moyens pour guider et déplacer les paires de mâchoires suivant une direction parallèle aux tubes,
- des moyens pour guider et déplacer transversalement aux tubes, au moins l'une des paires de mâchoires,
- des moyens à cames et galets contrôlant les déplacements des paires de mâchoires,
- une lame de coupe chauffante déplaçable verticalement suivant une trajectoire passant dans l'intervalle entre les deux paires de mâchoires pour sectionner les deux tubes,
- et une unité de commande et de contrôle régissant le fonctionnement des moyens moteurs générant les mouvements des paires de mâchoires et de la lame, afin que, entre autres phases et après découpage des tubes par la lame, le déplacement transversal des mâchoires amène les tubes à connecter dans le prolongement l'un de l'autre.

Dans l'appareil selon l'invention, chaque paire de mâchoires est montée sur un chariot déplaçable librement sur des glissières longitudinales d'un bâti et est soumise à l'action de ressorts, travaillant en extension, la poussant en direction d'au moins une butée escamotable portée par le bâti de l'autre chariot, tandis que,
d'une part, le bâti d'au moins l'un des chariots est lui-même monté coulissant sur des glissières transversales portées par le bâti de l'appareil et est relié à des moyens moteurs aptes à le déplacer sur ces glissières entre une position de départ, dans laquelle les paires de mâchoires sont alignées, et une position de connexion, dans laquelle les paires de mâchoires sont décalées et les butées escamotables effacées,
et que, d'autre part, la lame chauffante est portée par un chariot déplaçable, dans les deux sens et par des moyens moteurs, sur des glissières verticales du bâti de l'appareil, ledit chariot portant une came verticale en forme de coin dont les deux bords latéraux sont profilés et coopèrent chacun, après effacement des butées escamotables et pendant la remontée de la lame chauffante, avec un galet d'axe horizontal monté sur le chariot longitudinal correspondant, pour contrôler la course et les efforts d'aboutement des tubes.

Avec cet appareil, pendant la descente de la lame chauffante, chacun des chariots longitudinaux portant une paire de mâchoires est plaqué par ses moyens à ressorts contre une butée escamotable et ne soumet les deux tubes à aucun effort de rapprochement. La fusion coupe s'effectue donc alors que les tubes sont uniquement soumis aux efforts assurant leur maintien dans les mâchoires.

Lorsque le chariot à déplacement transversal parvient dans sa position de connexion, correspondant à l'alignement des deux tubes sectionnés, et que les deux butées escamotables sont effacées, les galets horizontaux des chariots viennent en contact avec les bords latéraux profilés de la came verticale. Ce déplacement, de faible valeur, permet d'appliquer plus fortement les extrémités des deux tubes sur la lame pour bénéficier des calories de celle-ci avant son retrait.

Lorsque la lame chauffante est relevée, son chariot entraîne avec lui la came verticale qui, par sa forme générale en coin, libère progressivement les deux chariots longitudinaux en contrôlant leur déplacement. Ces chariots, étant soumis à la poussée de ressorts travaillant en extension, reçoivent chacun un effort qui va en décroissant et qui se révèle favorable au contrôle du fluage de la matière fondue des deux extrémités des tubes lors de l'aboutement de ces tubes.

Dans une forme d'exécution de l'invention, chaque paire de mâchoires est amovible et est composée d'une mâchoire inférieure et d'une mâchoire supérieure comportant, chacune,
- deux canaux longitudinaux et espacés, de section semi-cylindrique et débouchant,
- des moyens complémentaires de positionnement
- et, contre sa face venant en vis à vis de l'autre paire de mâchoires, une plaquette verticale en matériau anti-adhérent obturant partiellement le débouché des canaux longitudinaux, pour former enclume d'aplatissement des tubes.

Cet aménagement permet d'adapter les paires de mâchoires à la dimension des tubes devant les recevoir et rend donc universel l'appareil.

Les plaquettes verticales, qui assurent l'aplatissement des tubes avant leur fusion découpage, permettent non seulement de chasser le fluide ou liquide contenu dans l'un des tubes avant l'opération de sectionnement mais garantissent, également, par la pression transversale exercée sur les tubes, la fermeture de ceux-ci avec un effort suffisant pour s'opposer à l'introduction dans cette extrémité d'un flux de matière plastique en fusion.

Avantageusement, au moins la partie inférieure de la lame chauffante est soumise, par des moyens interposés entre ses extrémités et les extrémités correspondantes d'un support en forme d'étrier, à des efforts longitudinaux opposés conservant la rectitude de son arête de coupe, lors de la fusion coupe des tubes.

Cet agencement est très important car il permet de réaliser des coupes planes, orthogonales à l'axe longitudinal des tubes, et garantit donc la qualité de l'aboutement et de la liaison par soudure des tubes.

D'autres caractéristiques et avantages ressortiront de la description qui suit en référence au dessin schématique annexé représentant, à titre d'exemple, une forme d'exécution de l'appareil selon l'invention.
Figure 1 est une vue en perspective de l'appareil, lorsqu'il est en position de repos avec une mâchoire retirée et une paire de mâchoires en position serrée,
Figure 2 est une vue partielle de face montrant l'appareil à échelle agrandie, lorsqu'il est dans la position de repos, après mise en place des tubes dans les mâchoires,
Figure 3 est une vue partielle, par l'arrière de l'appareil en fin de descente de la lame chauffante et avant déplacement transversal d'une paire de mâchoires,
Figure 4 est une vue partielle en coupe suivant IV-IV de figure 2,
Figure 5 est une vue en coupe suivant V-V de figure 4 montrant, à échelle agrandie, une section de la lame chauffante,
Figures 6 à 9 sont des vues en plan, par-dessus, des mâchoires inférieures lorsqu'elles sont, respectivement :

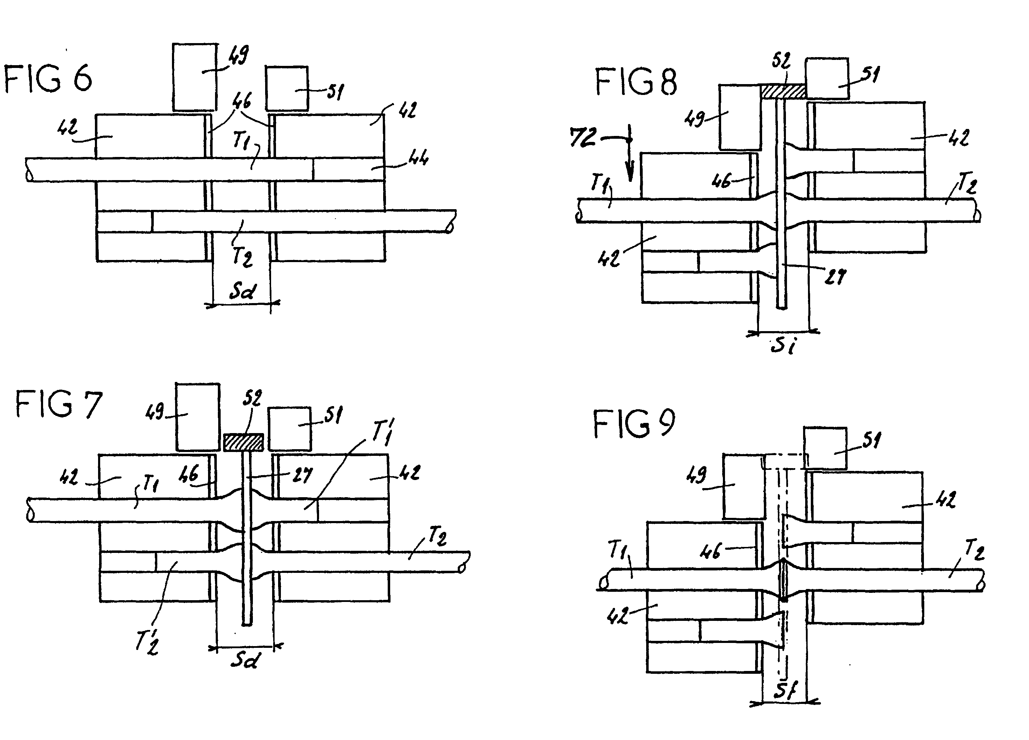

   - à la figure 6 en position de repos après mise en place des tubes,
   - à la figure 7, lors du sectionnement des tubes par la lame chauffante,
   - à la figure 8, après déplacement transversal d'un tube pour l'aligner avec l'autre,
   - et à la figure 9, lors de l'aboutement à chaud des tubes,

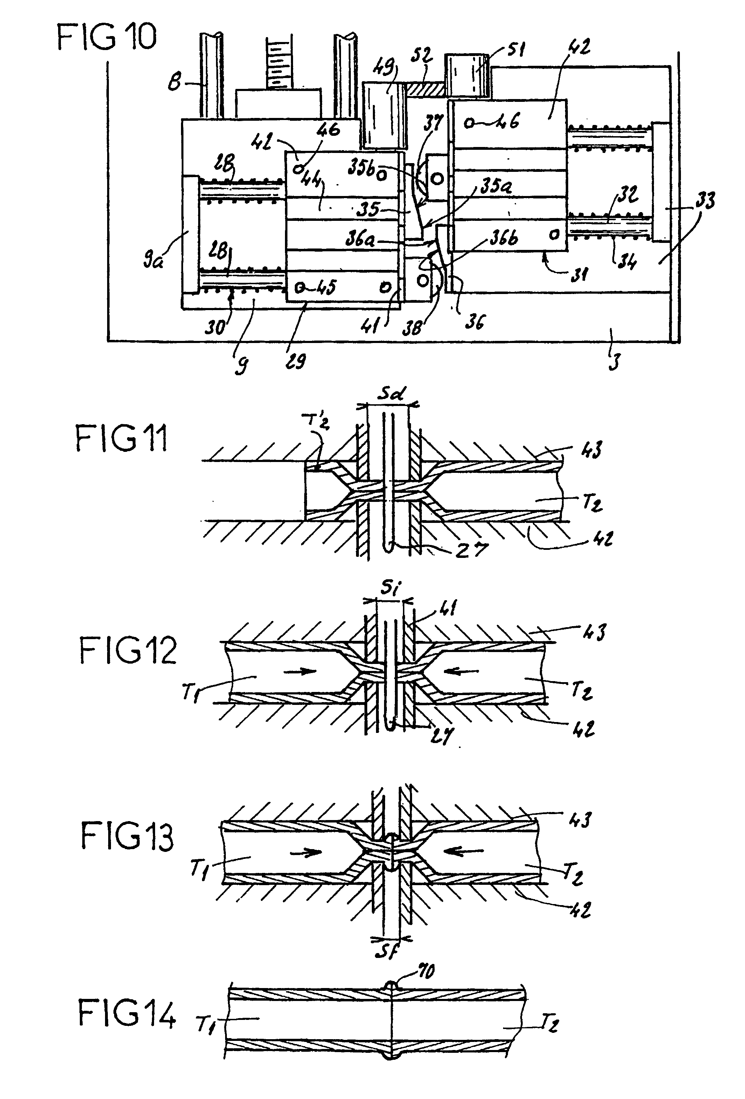

Figure 10 est une vue partielle en plan par-dessus correspondant à la position des mâchoires représentées figure 8 montrant plus en détails les butées escamotables,
Figures 11 à 14 sont des vues partielles, en coupe longitudinale verticale, montrant, à échelle agrandie, les différentes phases d'aboutement de deux tubes, et plus particulièrement :
   - à la figure 11, les mâchoires et un tube pendant la phase de fusion coupe,
   - à la figure 12, les mâchoires et les tronçons coupés, après déplacement du chariot,
   - à la figure 13, les mâchoires et les tubes en fin d'aboutement à chaud,
   - et à la figure 14, les tubes aboutés.

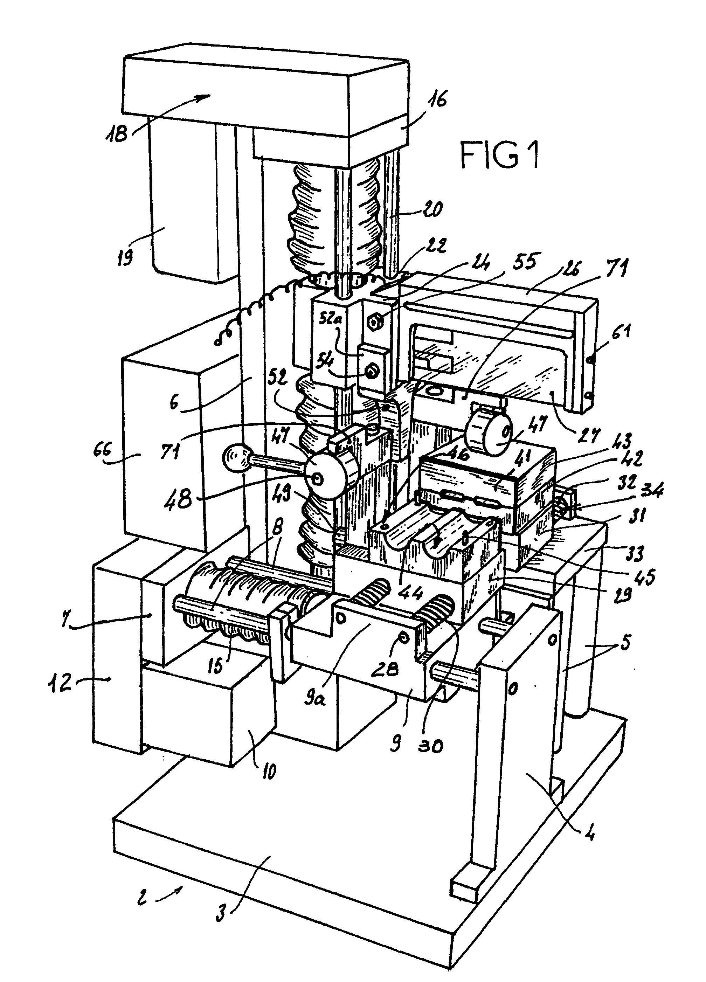

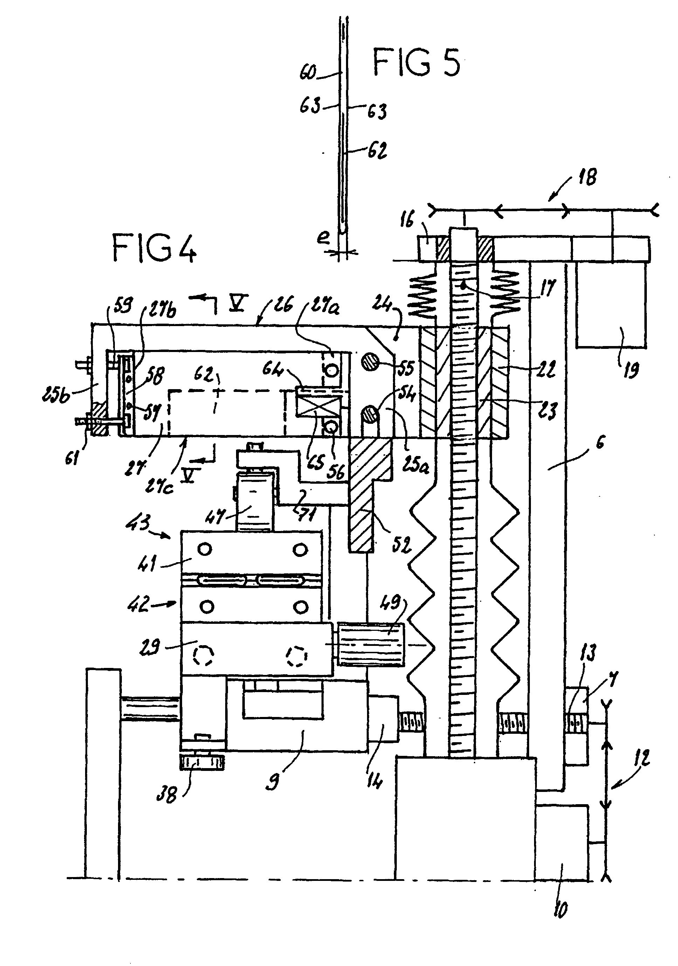

Selon la représentation de la figure 1, la référence numérique 2 désigne, de manière générale, le bâti de l'appareil composé d'une semelle 3, d'un montant frontal 4, de deux montants latéraux 5, et d'une colonne arrière 6. Cette colonne est solidaire d'une platine dorsale 7 qui supporte, avec le montant frontal 4, deux glissières horizontales et transversales 8 sur lesquelles un chariot 9 est monté libre en translation. Ce chariot est relié à des moyens aptes à le déplacer et constitués, par exemple, par un moteur électrique pas à pas 10 entraînant, par une transmission 12 par poulies et courroies, montrée figure 4, une vis 13 horizontale et transversale. Cette vis, qui est montée libre en rotation dans la colonne 6, coopère avec un écrou à billes 14, solidaire du chariot 9. Un soufflet 15, montré figure 1, protège la vis 13.

Comme montré figure 4, dans sa partie supérieure, la colonne 6 supporte une potence 16 dans laquelle est montée libre en rotation une vis verticale 17 dont l'extrémité supérieure, dépassant de la console, est reliée par une transmission 18 par poulies et courroies à l'arbre de sortie d'un moteur électrique pas à pas 19. L'extrémité inférieure de la vis 17 est supportée par une crapaudine non représentée. La potence 16 supporte également deux glissières verticales 20, montrées à la figure 1, sur lesquelles peut coulisser un chariot 22. La figure 4 montre que ce chariot porte un écrou à billes 23 qui coopère avec la vis 17 pour assurer ses déplacements verticaux.

Dans la forme d'exécution représentée aux figures 1 et 4, le chariot 22 comporte, dans sa partie antérieure, une chape horizontale 24 dans laquelle est engagé le montant postérieur 25a d'un étrier support amovible 26 portant une lame chauffante 27. Ces différents éléments seront décrits en détails plus loin.

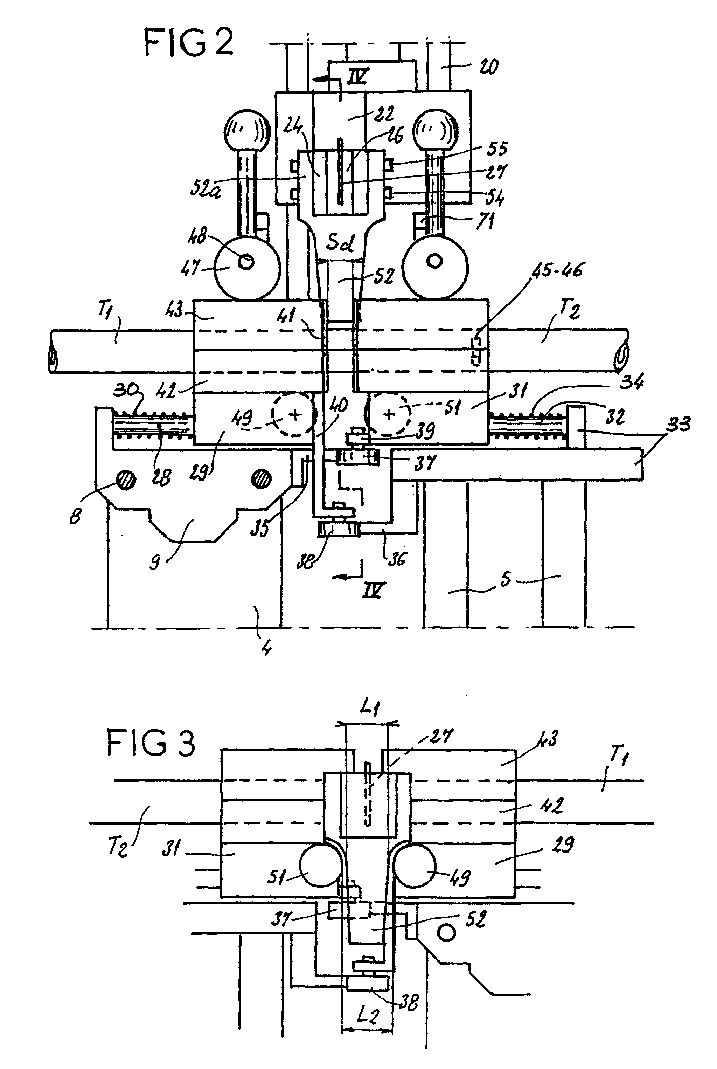

Comme montré aux figures 2 et 10, le chariot 9 à déplacement transversal supporte deux glissières 28, horizontales et longitudinales, sur lesquelles peut coulisser un chariot 29 à déplacement longitudinal. Des moyens à ressorts, tels que des ressorts hélicoïdaux 30, travaillant en extension, sont disposés autour des glissières 28 et sont interposés entre, respectivement, la paroi latérale 9a du chariot 9, et la face latérale du chariot 29 pour pousser, en permanence, ce chariot 29 en direction de la lame chauffante 27, et, plus exactement en direction de l'autre chariot à déplacement longitudinal 31, disposé en vis à vis de lui. Ce chariot 31 est monté libre en translation sur des glissières longitudinales 32, portées par un châssis 33 supporté par les montants latéraux 5. Des ressorts hélicoïdaux 34 sont disposés autour des glissières 32 pour pousser le chariot 31 en direction du chariot 29 lui faisant vis à vis.

Au repos, le déplacement l'un vers l'autre de chacun des chariots 29, 31 est limité par des butées escamotables. Comme montré plus en détails à la figure 10, chaque butée est composée d'une lame horizontale, respectivement 35, solidaire du chariot 9 constituant bâti pour le chariot 29, et 36, portée par le châssis 33 et, d'autre part, d'un galet d'appui à axe horizontal, respectivement, 37 pour le chariot 31, et 38 pour le chariot 29.

Les galets, respectivement 37 et 38, sont montés libres en rotation à l'extrémité de supports, respectivement 39 et 40, visibles à la figure 2 et liés aux chariots correspondants, 31 et 29.

La figure 2 montre que les lames 35 et 36 et leurs galets respectifs 37 et 38, sont décalés verticalement dans l'espace, tandis que la figure 10 montre que les mêmes ensembles sont décalés dans le plan horizontal. Chaque lame de butée 35, 36, présente une face d'appui plane et transversale, respectivement 35a, 36a, juxtaposée à une rampe d'effacement, respectivement 35b, 36b. Ces rampes sont orientées de manière à permettre le rapprochement l'un vers l'autre des chariots 29 et 31, lors du déplacement transversal du chariot 9, c'est-à-dire lors du passage du chariot 9 de sa position de repos, dans laquelle le chariot longitudinal 29 qu'il porte est dans le prolongement du chariot 31, à sa position de connexion, dans laquelle le chariot 29 est décalé par rapport au chariot 31 pour aligner les tubes.

Il est à noter que, dans l'exemple illustré, seul le chariot longitudinal 29 est monté mobile transversalement par rapport au chariot longitudinal 31. Bien entendu, il peut être prévu de monter, également, le chariot longitudinal 31, mobile transversalement pour permettre d'obtenir l'alignement des tubes.

Comme montré aux figures 1 et 2, chacun des chariots 29, 31 porte une paire de mâchoires identiques, à savoir une mâchoire inférieure 42, et une mâchoire supérieure 43. Chacune de ces mâchoires est traversée longitudinalement par deux canaux longitudinaux et parallèles 44, de section semi-cylindrique et débouchant chacun à leurs deux extrémités. Les canaux sont disposés parallèlement et espacés de la même valeur dans les diverses mâchoires. Le positionnement relatif des mâchoires dans chaque paire et par rapport au chariot correspondant 29 ou 31, est assuré par des doigts verticaux 45 (figures 1 et 10) coopérant avec des alésages 46 ménagés en vis à vis. Cet aménagement facilite l'amovibilité des mâchoires et permet surtout de les remplacer par des mâchoires ayant des canaux adaptés à celui des tubes T1 et T2 dont il faut assurer la connexion.

Chacune des mâchoires de chaque paire de mâchoires 42, 43, comporte, fixée contre sa face faisant vis à vis à l'autre paire de mâchoires, une plaquette verticale 41 en matériau anti-adhérent obturant partiellement le débouché des canaux longitudinaux 44 pour former enclume d'aplatissement des tubes T1, T2.

Comme le montre plus en détails la figure 10, chacun des chariots à déplacement longitudinal 29 et 31, porte, par exemple en saillie de sa face postérieure, un galet d'axe horizontal, respectivement 49 et 51. Ces deux galets sont destinés à coopérer avec les bords profilés d'une came 52, en forme de coin, portée par le chariot 22 déplaçable verticalement. Cette came 52, qui pend au-dessous du chariot 22, est fixée, comme montré aux figures 1 et 2, par son extrémité en forme de chape 52a, venant coiffer la chape 24 portant l'étrier porte-lame 26. La fixation est assurée par un boulon traversant 54 (figures 1 et 2), disposé au-dessous du boulon 55 assurant la fixation de l'étrier dans la chape. Ce mode de fixation permet de remplacer la came 52 pour adapter ses bords profilés aux conditions d'aboutement.

Le serrage de chaque paire de mâchoires 42, 43 et des plaquettes 41 qui leur sont associées, est assuré, dans la forme d'exécution représentée aux figures 1 et 2, par un excentrique 47 disposé au-dessus d'elle et monté libre en rotation autour d'un axe 48 porté par le bâti 2. La figure 1 montre que l'axe 48 est horizontal et fait saillie d'un bras 71, articulé autour d'un axe vertical porté par le bâti 2, pour pouvoir être escamoté et faciliter le dégagement des mâchoires.

Dans une forme de réalisation préférée représentée aux figures 4 et 5, la lame chauffante 27 est fixée par son bord vertical postérieur 27a sur le montant postérieur 25a de l'étrier 26, par exemple par des vis ou rivets transversaux 56, tandis que son bord antérieur 27b est rendu solidaire par des vis ou rivets 57, d'une barrette 58, par exemple de section en L. Cette barrette est reliée au montant antérieur 25b de l'étrier par au moins deux organes de liaison filetés horizontaux, et par exemple, par deux vis 59. La tête de chaque vis prend appui sur l'aile coudée de la barrette 58, tandis que sa tige traverse cette barrette et le montant 25b pour recevoir un écrou 61 vissé sur elle. Lorsque les écrous sont serrés, les vis 59 sont mises en tension et communiquent à la lame 27, une tension longitudinale qui est opposée à l'effort de retenue assuré par la fixation de son autre extrémité. Ces efforts opposés maintiennent en tension la lame chauffante et garantissent lorsqu'elle est portée à la température de sectionnement, de l'ordre de 220°C, que son arête active 27c conserve sa rectitude et ne soit pas soumise à des déformations consécutives à sa dilatation longitudinale.

Par ailleurs, et comme montré à la figure 5, cette lame chauffante est avantageusement constituée par pliage en U d'un feuillard métallique ayant une épaisseur de l'ordre de 0,2 millimètre. Dans ces conditions, l'âme du U forme l'arête active 27c de la lame chauffante et l'intervalle 60, entre les deux ailes ainsi obtenues, sert de logement à un moyen 62, tel qu'un réchauffeur électrique, ayant également une épaisseur de l'ordre de 0,2 millimètre. L'ensemble, ainsi constitué, forme une lame dont l'épaisseur e est, au maximum, de l'ordre de un millimètre. Les faces extérieures de la lame chauffante 27 sont recouvertes par un revêtement anti-adhérent 63.

Enfin, comme montré figure 4, dans sa partie postérieure, la lame 27 est traversée de part en part par une encoche 64 servant de logement à des moyens 65 de régulation de la température de la lame.

Les différents moyens électriques 62, 65, de même que les moteurs électriques 10 et 19 régissant les mouvements, respectivement, du chariot transversal 9 et du chariot vertical 22, sont reliés, par des circuits électriques non représentés, à une unité de commande et de contrôle 66.

Le fonctionnement de l'appareil selon l'invention découle directement de la description qui précède.

Lorsque l'appareil est en position de repos, le chariot 22 est en position haute avec la lame chauffante 27 et la came en coin 52, le chariot transversal 9 est en position arrière de repos, les deux chariots longitudinaux 29 et 31 sont en butée sur leur butée escamotable en ménageant, entre eux, un espace Sd qui, visible à la figure 2, a une valeur de l'ordre de 5 millimètres, et est également réparti de part et d'autre du plan médian vertical de la lame chauffante 27.

Pour assurer la connexion des deux tubes T1, T2 en matière thermoplastique, les mâchoires supérieures 43 sont enlevées et les deux tubes sont mis tête bêche dans les canaux 44 alignés des mâchoires inférieures 42, comme montré à la figure 6. Après mise en place des mâchoires supérieures 43, les excentriques de serrage 47 sont actionnés pour assurer le serrage des paires de mâchoires et par les plaquettes 46, aplatir les tubes qui prennent la forme représentée figure 7.

A ce stade, le cycle de fonctionnement automatique de la machine peut être enclenché. Ce cycle débute par l'abaissement de la lame chauffante 27 jusqu'à ce qu'elle vienne en contact avec les tubes T1 et T2 pour en assurer le sectionnement par fusion-coupe, comme montré à la figure 11 où T'1 et T'2 désignent les chutes.

Il est précisé que, grâce à la faible distance en porte-à-faux des tubes dans l'intervalle entre les paires de mâchoires, mais aussi à l'absence de tout effort de rapprochement tendant à plaquer ces tubes contre les faces de la lame chauffante 27, la fusion-coupe s'effectue dans d'excellentes conditions, sans aucune déformation des tubes. Grâce à cela, les tubes présentent une face en bout plane et orthogonale à leur axe longitudinal, ce qui facilite leur aboutement ultérieur.

Pendant la descente de la lame chauffante 27, la came verticale 52 s'insère entre les galets respectivement 49 et 51, des chariots 29 et 31, sans venir en contact avec ces galets, puisque, comme montré à la figure 3 correspondant à la position de la came en fin de course inférieure, la largeur L1 de la came, mesurée dans le plan médian horizontal passant par l'axe des galets 49, 51, est inférieure à la distance L2 entre ces galets. La figure 7 montre d'ailleurs que, à la fin de la descente de la lame, l'intervalle Sd, entre les paires de mâchoires, a la même valeur qu'au début de l'opération.

Dans la phase suivante, montrée à la figure 8, le chariot transversal 9 est déplacé transversalement, dans le sens de la flèche 72, de sa position de repos à sa position de connexion, pour amener le tuyau T1 dans le prolongement du tuyau T2. Durant ce déplacement, la lame de butée 35 se déplace par rapport au galet 37, tandis que le galet 38 roule sur la lame de butée 36. Il en résulte que les appuis limitant le déplacement des chariots 29 et 31 passent des faces planes 35a, 36a, aux rampes 35b et 36b en permettant le rapprochement des chariots 29 et 31, et, en conséquence, le déplacement relatif entre les paires de mâchoires qu'ils portent en vue d'aligner les deux tubes T1, T2. Toutefois, ce déplacement est limité puisque, comme montré figures 8 et 10, les galets horizontaux 49 et 51 viennent en contact avec les bords latéraux profilés de la came 52 et limitent ses déplacements.

Il apparaît que, durant le déplacement transversal du chariot 9, les faces en bout des tubes T1, T2, obtenues par fusion-coupe et à l'état visqueux, sont appliquées progressivement contre les faces latérales de la lame chauffante 27, ce qui limite le frottement sur cette lame. A la fin de ce mouvement, les faces en bout des tubes T1, T2 sont dans la position représentée à la figure 12, où la dimension Si montre la variation de l'intervalle entre les mâchoires.

Suivant l'invention, l'effort d'application des tubes sur la lame chauffante 27 est maintenu pendant une durée temporisée pour augmenter la quantité de calories transmises par la lame 27 aux extrémités des tubes, et augmenter la quantité de matière visqueuse avant élévation de la lame chauffante. Dès que celle-ci s'élève, le déplacement simultané de la came 52 provoque, par les galets 49 et 51 roulant sur ses bords longitudinaux, le rapprochement contrôlé des deux paires de mâchoires 42,43 en direction l'une de l'autre. En complément du contrôle du déplacement de l'extrémité de chaque tube, les ressorts 30 et 34 qui fournissent le mouvement, s'allongent et développent des efforts opposés qui vont en décroissant.

La combinaison du contrôle des efforts d'aboutement, de la décroissance de cet effort et de la planéité des surfaces en vis à vis permettent à la matière visqueuse des deux extrémités des tubes T1, T2 venant d'abord en vis à vis, puis en contact au fur et à mesure du déplacement de la lame chauffante, de fusionner dans d'excellentes conditions, sans avoir tendance à fluer à l'intérieur des tubes et sans formation de flux préférentiels pouvant affecter la stérilité des conditions de connexion.

La came verticale 52 a une longueur lui permettant de contrôler le rapprochement des tubes, même après que la lame chauffante 27 ait échappé de la zone de connexion et jusqu'à ce que les lames de butée 35 et 36 prennent le relais en coopérant avec les galets respectivement 37 et 38. Ainsi, le contrôle des efforts d'aboutement s'effectue pour un écartement de mâchoires allant de la valeur Si représentée aux figures 8 et 12, à la valeur Sf représentée aux figures 9 et 13. Il est précisé qu'aux figures 6 à 9 et 11 à 13, les valeurs des dimensions Sd, Si et Sf ont été volontairement exagérées, puisque, en pratique, la variation de valeurs est de l'ordre de 1,5 à 2 millimètres.

En fin de cycle, dont la durée totale est de l'ordre d'une minute, c'est-à-dire plusieurs fois inférieure à la valeur du cycle des appareils actuels existant sur le marché, les deux tubes connectés sont laissés à refroidir, pendant une durée de l'ordre d'une minute, puis il est procédé à l'enlèvement des mâchoires 43 et à l'extraction du tube formé par connexion des tubes T1-T2 connectés.

Le cycle se termine par le retour en position de repos du chariot transversal 9, retour impliquant l'écartement des paires de mâchoires à leur valeur initiale Sd par le contact des galets 37, 38 sur les lames de butée 35, 36.

Le tube ainsi obtenu est pressé perpendiculairement à sa zone d'aplatissement pour reprendre sa forme initiale, comme montré figure 14. Sa zone de jonction est matérialisée par un unique bourrelet extérieur 70 puisque, en raison de l'aplatissement des tubes et du contrôle des efforts d'aboutement, aucune matière visqueuse n'a pu pénétrer à l'intérieur de cette zone de jonction.

Des essais ont montré que, moyennant un changement des mâchoires, l'appareil selon l'invention pouvait assurer la connexion de tubes ayant un diamètre extérieur allant de 3/8^{ème} de pouce, soit 9,5 millimètres à ¾ de pouce, soit 19 millimètres, pour des diamètres intérieurs allant de ¼ de pouce, soit 6,4 millimètres à ½ pouce, soit 12,7 millimètres, que les matières des tubes à connecter soient identiques ou différentes, mais alors compatibles pour assurer leur liaison par soudure. Dans cette plage de valeurs, les connexions obtenues sont stériles, peuvent résister pendant une minute à un effort de traction allant, respectivement de 8 à 23 décanewtons, et sont étanches à une pression d'air comprimé de 2 bars.

Par ailleurs, les conditions de fusion-coupe procurées par la rigidité des moyens de maintien des tubes, par la rectitude de la lame chauffante, à l'état chauffé, et par son caractère anti-adhérent, associées au contrôle des efforts d'aboutement, éliminent tout dépôt et tout dégagement de fumées et garantissent la non-communication du contenu des tubes avec le milieu ambiant.

Le procédé et l'appareil selon l'invention peuvent être mis en oeuvre pour connecter, de manière stérile, dans une ambiance stérile ou contaminée, tout tube souple en matière thermoplastique, par exemple :
- pour souder le tube d'un récipient de solution de dialyse avec un tube provenant de la cavité péritonéale d'un patient,
- pour assembler des tubes souples solidaires de poche de sang,
- et, de manière générale, tout tube souple associé à un conteneur contenant un liquide ou fluide, biologique ou non, avec un tube permettant de conduire le contenu du conteneur vers un appareil de traitement d'un patient, vers un appareil d'analyse ou vers un réceptacle d'une installation de traitement, de fabrication ou autre.

## Revendications

1. Procédé pour réunir bout à bout deux tuyaux souples en matière thermoplastique, à extrémité fermée ou non, comprenant les phases suivantes :
- sectionnement des deux tubes (T1, T2) par fusion-coupe au moyen d'une lame chauffante (27) déplacée dans l'intervalle entre deux paires de mâchoires (42, 43) espacées, assurant le positionnement et le maintien des tubes, parallèlement entre eux,
- déplacement relatif entre les paires de mâchoires pour aligner les deux tubes devant être connectés,
- retrait de la lame chauffante (27),
- et rapprochement des extrémités des tubes (T1, T2) l'une vers l'autre pour assurer leur jonction par soudage,
selon lequel:
- pendant la phase de sectionnement des tubes (T1, T2) par fusion-coupe, on n'exerce aucun effort de rapprochement sur les tubes,
- et, dès la fin de la phase d'alignement des tubes et pendant la phase de rapprochement de ces tubes (T1, T2), on communique à chacun d'eux un effort longitudinal contrôlé dont la valeur va en décroissant depuis leur appui sur la lame jusqu'à la fin de leur aboutement visqueux.

2. Procédé selon la revendication 1, selon lequel on soumet chacun des tubes (T1, T2) à la fin de la phase d'alignement, à un effort longitudinal plaquant son extrémité contre la lame chauffante pendant une durée limitée temporisée.

3. Procédé selon la revendication 1 ou 2, selon lequel :
- on assure l'aplatissement des deux tubes (T1,T2) préalablement à leur sectionnement,
- et on exerce, après la jonction par soudage des extrémités des deux tubes (T1,T2), sur le tube ainsi obtenu, une pression perpendiculaire à sa zone d'aplatissement en vue de la reprise de la forme initiale.

4. Appareil pour la connexion stérile de deux tubes souples, à extrémité fermée ou non, en matière thermoplastique comprenant deux paires espacées de mâchoires (42, 43) avec des moyens (44) positionnant parallèlement les deux tubes (T1, T2) à assembler, des moyens (28, 32, 29, 31) pour guider et déplacer les paires de mâchoires suivant une direction parallèle aux tubes (T1, T2), des moyens (8, 9) pour guider et déplacer transversalement aux tubes, au moins l'une des paires de mâchoires, des moyens à cames et galets contrôlant les déplacements des paires de mâchoires (42, 43), une lame de coupe chauffante (27) déplaçable verticalement suivant une trajectoire passant dans l'intervalle entre les deux paires de mâchoires, pour sectionner les deux tubes (T1, T2), et une unité de commande et de contrôle (66) régissant le fonctionnement des moyens moteurs générant les mouvements des paires de mâchoires (42, 43) et de la lame (27), afin que, entre autres phases et après découpage des tubes (T1, T2) par la lame (27), le déplacement transversal d'une paire de mâchoires amène les tubes à connecter (T1, T2) dans le prolongement l'un de l'autre, appareil dans lequel chaque paire de mâchoires (42, 43) est montée sur un chariot (29, 31) déplaçable librement sur des glissières longitudinales (28, 32) d'un bâti (9, 33) et est soumise à l'action de ressorts (30, 34) travaillant en extension, la poussant en direction d'au moins une butée escamotable (35, 36, 37, 38) portée par le bâti de l'autre chariot (29, 31), tandis que, d'une part, le bâti (9) d'au moins l'un des chariots (29) est lui-même monté coulissant sur des glissières transversales (8) portées par le bâti (2) de l'appareil et est relié à des moyens moteurs (10) aptes à le déplacer sur ces glissières (8) entre une position de départ, dans laquelle les paires de mâchoires (42, 43) sont alignées, et une position de connexion, dans laquelle les paires de mâchoires sont décalées et les butées escamotables (35, 36, 37, 38) effacées, et que, d'autre part, la lame chauffante (27) est portée par un chariot (22) déplaçable, dans les deux sens et par des moyens moteurs (19), sur des glissières verticales (20) du bâti de l'appareil, ledit chariot (22) portant une came verticale (52) en forme de coin dont les deux bords latéraux sont profilés et coopèrent chacun, après effacement des butées escamotables (35, 36, 37, 38) et pendant la remontée de la lame chauffante (27), avec un galet d'axe horizontal (49, 51) monté sur le chariot longitudinal correspondant (29,31), pour contrôler la course et les efforts d'aboutement des tubes (T1, T2).

5. Appareil selon la revendication 4, **caractérisé en ce que** chaque paire de mâchoires (42, 43) est amovible et est composée d'une mâchoire inférieure (42) et d'une mâchoire supérieure (43) comportant, chacune :
- deux canaux (44), longitudinaux et espacés, de section semi-cylindrique et débouchant,
- des moyens complémentaires de positionnement,
- et, contre sa face venant en vis à vis de l'autre paire de mâchoires, une plaquette verticale (41) en matériau anti adhérent obturant partiellement le débouché des canaux longitudinaux (44), pour former enclume d'aplatissement des tubes (T1, T2).

6. Appareil selon la revendication 4, **caractérisé en ce que** au moins la partie inférieure de la lame chauffante (27) est soumise, par des moyens interposés entre ses extrémités (27a, 27b) et les extrémités correspondantes (25a, 25b) d'un support (26) en forme d'étrier, à des efforts longitudinaux opposés conservant la rectitude de son arête active (27c), lors de la fusion coupe des tubes (T1, T2).

7. Appareil selon la revendication 6, **caractérisé en ce que** la lame chauffante (27) est fixée par son bord vertical postérieur (27a) sur le montant postérieur (25a) de l'étrier support (26) et est solidaire, par son bord vertical antérieur (27b), d'une barrette verticale (58), tandis que les moyens exerçant sur elle un effort longitudinal de traction comprennent au moins deux organes filetés (59) dont les têtes s'appuient sur la barrette (58) et dont les tiges filetées, traversant la barrette (58) et le montant antérieur (25b) de l'étrier (26), se vissent dans des écrous (61), en appui sur ledit montant (27b).

8. Appareil selon la revendication 6, **caractérisé en ce que** la lame chauffante (27) est formée par un feuillard métallique plié en U dont l'âme constitue l'arête active (27c) et dont l'intervalle entre les ailes contient un moyen (62) générant des calories, qui est contrôlé par des moyens thermostatiques (65) disposés dans une encoche (64) traversant la lame (27), tandis que les faces externes de la lame sont revêtues par un revêtement anti- adhérent (63).

9. Appareil selon la revendication 6, **caractérisé en ce que** l'étrier-support (26) portant la lame (27) est monté de manière amovible sur le chariot (22) porte lame.

10. Appareil selon la revendication 4, **caractérisé en ce que**, lorsque la lame chauffante (27) est en fin de course de descente, la distance (L1) entre les deux bords latéraux profilés de la came verticale (52) en forme de coin, mesurée dans le plan horizontal contenant les axes des deux galets horizontaux (49, 51), est inférieure à la distance (L2) entre ces galets.

11. Appareil selon la revendication 4, **caractérisé en ce que** la came verticale (52) est montée de manière amovible sur le chariot (22) porte- lame.

12. Appareil selon la revendication 4, **caractérisé en ce que** chaque butée escamotable est composée :
- d'une part, d'une lame de butée horizontale (35, 36) liée au bâti correspondant (9, 33), ladite lame de butée présentant une face transversale plane (35a,36a), une rampe d'effacement (35b, 36b), et s'étendant sur une longueur au moins égale à la course de déplacement des mâchoires déplaçables transversalement,
- et d'autre part, d'un galet (37, 38) d'axe vertical monté libre en rotation sur un support (39, 40), solidaire du chariot (31, 29) correspondant et saillant de ce chariot en direction de la lame de butée (35, 36) qui lui fait face.

## Patentansprüche

1. Verfahren zum endseitigen Verbinden von zwei nachgiebigen Rohren aus thermoplastischem Material mit einem geschlossenen oder nicht geschlossenen Ende, aufweisend folgende Schritte:
- Unterteilen von zwei Rohren (T1, T2) durch Schmelzschneiden mittels einer Heizklinge (27), die in einem Zwischenraum zwischen zwei beabstandeten Klemmbackenpaaren (42, 43) verschoben wird, unter Gewährleistung der Positionierung und Haltung der Rohre parallel zueinander,
- Verschieben der Klemmbackenpaare relativ zueinander, um die beiden Rohre auszurichten, bevor sie verbunden werden,
- Rückziehen der Heizklinge (27),
- und Aufeinanderzubewegen der Enden der Rohre (T1, T2), um ihre Schweißverbindung sicherzustellen,
- wobei:
während des Schritts zum Unterteilen der Rohre (T1, T2) durch Schmelzschneiden keinerlei Kraft zur Aufeinanderzubewegung der Rohre auf diese ausgeübt wird, und
- ab dem Ende des Schritts zur Ausrichtung der Rohre und während des Schritts zur Aufeinanderzubewegung dieser Rohre (T1, T2) Ausüben einer kontrollierten Längskraft auf jedes von ihnen, deren Wert kleiner wird, ab ihrer Anlage an der Klinge, bis zum Ende ihrer viskosen Aneinanderfügung.

2. Verfahren nach Anspruch 1, bei dem jedes der Rohre (T1, T2) am Ende des Ausrichtungsschritts einer Längskraft unterworfen wird, die sein Ende während einer begrenzten Verweildauer an die Heizklinge anlegt.

3. Verfahren nach Anspruch 1 oder 2, bei dem:
- die Abflachung der beiden Rohre (T1, T2) vor ihrer Durchtrennung sichergestellt wird,
- und nach der Schweißverbindung der Enden der beiden Rohre (T1, T2) auf das dadurch erzeugte Rohr ein Druck senkrecht zu seiner Abflachungszone ausgeübt wird, um die anfängliche Form wiederzugewinnen.

4. Vorrichtung zur sterilen Verbindung von zwei nachgiebigen Rohren mit einem verschlossenen oder nicht verschlossenen Ende aus thermoplastischem Material, aufweisend: Zwei voneinander beabstandete Klemmbackenpaare (42, 43) mit Mitteln (44) zum parallelen Positionieren der zusammen zu bauenden beiden Rohre (T1, T2), Mittel (28, 32, 29, 31) zum Führen und Verschieben der Klemmbackenpaare entlang einer Richtung parallel zu den Rohren (T1, T2), Mittel (8, 9) zum Führen und Querverschieben der Rohre, zumindest eines der Klemmbackenpaare, Mittel mit Kurvenscheiben und Rollen zum Steuern der Verschiebungsvorgänge der Klemmbackenpaare (42, 43), eine Heizschneidklinge (27), die vertikal entlang einer Bahn verschiebbar ist, die einen Zwischenraum zwischen den beiden Klemmbackenpaaren durchsetzt, um die beiden Rohre (T1, T2) zu unterteilen, und eine Befehls- und Steuereinheit (66), die die Funktion von Motormitteln regelt, welche die Bewegungen der Klemmbackenpaare (42, 43) und der Klinge (27) erzeugen, wobei zwischen zwei weiteren Schritten und nach dem Durchtrennen der Rohre (T1, T2) durch die Klinge (27) die Querverschiebung eines Klemmbackenpaars die zu verbindenden Rohre (T1, T2) in Verlängerung zueinander mitnimmt, wobei in der Vorrichtung jedes Klemmbackenpaar (42, 43) auf einem Schlitten (29, 31) angebracht ist, der auf Längsschienen (28, 32) eines Rahmens (9, 33) frei verschiebbar und der Wirkung von Federn (30, 34) unterworfen ist, die zugbelastet sind und es in Richtung auf zumindest einen einziehbaren Anschlag (35, 36, 37, 38) drängen, der durch den Rahmen des anderen Schlittens (29, 31) getragen ist, wobei einerseits der Rahmen (9) von zumindest einem der Schlitten (29) selbst gleitend auf den Querschienen (8) angebracht ist, die durch den Rahmen (2) der Vorrichtung getragen sind, und mit Motormitteln (10) verbunden ist, die dazu ausgelegt sind, diesen Schienen (8) zwischen einer Ausgangsposition, in welcher die Klemmbackenpaare (42, 43) fluchten, und einer Verbindungsposition zu verschieben, in welcher die Klemmbackenpaare und die betätigten einziehbaren Anschläge (35, 36, 37, 38) versetzt sind, und dass andererseits die Heizklinge (27) durch einen in den beiden Richtungen und durch die Motormittel (19) verschiebbaren Schlitten (22) auf vertikalen Schienen (20) des Rahmens der Vorrichtung getragen ist, wobei der Schlitten (22) eine vertikale Kurvenscheibe (52) in Münzenform trägt, deren beide Seitenränder profiliert sind und jeweils nach Betätigung der einziehbaren Anschläge (35, 36, 37, 38) sowie während des Hochziehens der Heizklinge (27) mit einer Rolle (49, 51) mit horizontaler Achse zusammenwirken, die auf dem entsprechenden Längsschlitten (29, 31) angebracht ist, um die Bahn und die Aneinanderfügkräfte für die Rohre (T1, T2) zu steuern.

5. Vorrichtung nach Anspruch 4, **dadurch gekennzeichnet, dass** jedes Klemmbackenpaar (42, 43) beweglich ist und aus einer unteren Klemmbacke (42) und einer oberen Klemmbacke (43) besteht, die jeweils aufweisen:
- Zwei in Längsrichtung verlaufende und beabstandete Kanäle (44) halbzylindrischen Querschnitts, wobei die Kanäle ausmünden,
- komplementäre Positionierungsmittel,
- und auf seiner Fläche in Gegenüberlage zu dem anderen Klemmbackenpaar eine vertikale Platte (41) aus antihaftendem Material zum teilweisen Versperren der Ausmündung der Längskanäle (44), um einen Abflachungsamboss für die Rohre (T1, T2) zu bilden.

6. Vorrichtung nach Anspruch 4, **dadurch gekennzeichnet, dass** zumindest der untere Teil der Heizklinge (27) durch Mittel, die zwischen ihren Enden (27a, 27b) und den entsprechenden Enden (25a, 25b) eines Trägers (26) in Bügelform entgegengesetzten Längskräften unterworfen ist, die die Geradheit seines aktiven Anschlags (27c) bei der Schmelzdurchtrennung der Rohre (T1, T2) aufrechterhält.

7. Vorrichtung nach Anspruch 6, **dadurch gekennzeichnet, dass** die Heizklinge (27) durch ihren vertikalen hinteren Rand (27a) auf dem hinteren Schenkel (25a) des Tragbügels (26) fest angebracht ist, und durch seinen hinteren vertikalen Rand (27b) fest mit einem vertikalen Steg (58) verbunden ist, wobei die Mittel, die auf sie eine Längszugkraft ausüben, zumindest zwei mit Gewinde versehene Organe (29) umfassend, deren Köpfe am Steg (58) anliegen, und deren Gewindeschäfte, welche den Steg (58) und den hinteren Schenkel (25b) des Bügels (26) queren, in Muttern (61) geschraubt sind, die an dem Schenkel (27b) anliegen.

8. Vorrichtung nach Anspruch 6, **dadurch gekennzeichnet, dass** die Heizklinge (27) durch ein Metallblech in U-Form gebildet ist, deren Basis den aktiven Anschlag (27c) bildet, wobei der Zwischenraum zwischen deren Schenkeln ein Mittel (62) enthält, das Wärme erzeugt, und das durch thermostatische Mittel (65) gesteuert ist, die in einer Kerbe (64) angeordnet sind, welche die Klinge (27) durchsetzt, wobei die Außenseiten der Klinge mit einer Antihaftungsbeschichtung (63) überzogen sind.

9. Vorrichtung nach Anspruch 6, **dadurch gekennzeichnet, dass** der Tragbügel (26) die Klinge (27) trägt und auf dem die Klinge tragenden Schlitten (22) beweglich angebracht ist.

10. Vorrichtung nach Anspruch 4, **dadurch gekennzeichnet, dass**, wenn die Heizklinge (27) sich am Ende ihrer Absenkbahn befindet, die Distanz L1 zwischen den beiden profilierten Seitenrändern der vertikalen Kurvenscheibe (52) in Münzenform, gemessen in der horizontalen Ebene, welche die Achsen der beiden horizontalen Rollen (49, 51) enthält, kleiner als die Distanz (L2) zwischen diesen Rollen ist.

11. Vorrichtung nach Anspruch 4, **dadurch gekennzeichnet, dass** die vertikale Kurvenscheibe (52) auf dem die Klinge tragenden Schlitten (22) beweglich angebracht ist.

12. Vorrichtung nach Anspruch 4, **dadurch gekennzeichnet, dass** jeder einziehbare Anschlag aus Folgendem besteht:
- Einerseits aus einer horizontalen Anschlagklinge (35, 36), die mit dem entsprechenden Rahmen (9, 33) verbunden ist, wobei die Anschlagklinge eine planare Querseite (35a, 36a) und eine Rückstellrampe (35b, 36b) aufweist und sich über eine Länge erstreckt, die zumindest gleich der Verschiebungsbahn der quer verschiebbaren Klemmbacken ist,
- und andererseits eine Rolle (37, 38) mit vertikaler Achse, die frei drehbar auf einem Träger (39, 40) in fester Verbindung mit einem entsprechenden Schlitten (31, 29) angebracht ist und von diesem Schlitten in Richtung auf die Anschlagklinge (35, 36) vorsteht, die ihr gegenüberliegt.

## Claims

1. Method for butt-joining two flexible pipes made of thermoplastic, with closed or unclosed ends, comprising the following phases:
- cutting through the two tubes (T1, T2) by melt-cutting using a heated blade (27) moved through the gap between two pairs of spaced-apart jaws (42, 43) which position and hold the tubes, parallel to one another,
- moving the pairs of jaws relative to one another to align the two tubes which are to be connected,
- withdrawing the heated blade (27),
- and bringing the ends of the tubes (T1, T2) closer together to join them together by welding,
whereby:
- during the phase of cutting through the tubes (T1, T2) by melt-cutting, no moving-together force is exerted on the tubes,
- and, as soon as the phase of aligning the tubes ends and during the phase of moving these tubes (T1, T2) closer together, a controlled longitudinal force is applied to each of these tubes, the value of this force decreasing from the time they rest against the blade until they are viscously butted together.

2. Method according to Claim 1, wherein each of the tubes (T1, T2), at the end of the alignment phase, is subjected to a longitudinal force that presses its end against the heated blade for a timed, limited length of time.

3. Method according to Claim 1 or 2, wherein:
- the two tubes (T1, T2) are flattened before they are cut,
- and after the ends of the two tubes (T1, T2) have been joined by welding, pressure perpendicular to the flattened region is applied to the tube thus obtained to make it return to the initial shape.

4. Apparatus for the sterile connection of two flexible tubes, with closed or open ends, made of thermoplastic and comprising two spaced-apart pairs of jaws (42, 43) with means (44) positioning the two tubes (T1, T2) that are to be assembled so that they are parallel, means (28, 32, 29, 31) for guiding and moving the pairs of jaws in the direction parallel to the tubes (T1, T2), means (8, 9) for guiding and moving at least one of the pairs of jaws transversely to the tubes, cam and follower means controlling the movements of the pairs of jaws (42, 43), a heated cutting blade (27) that can move vertically in a path which passes through the gap between the two pairs of jaws, to cut through the two tubes (T1, T2), and a command and control unit (66) governing the operation of the drive means that generate the movements of the pairs of jaws (42, 43) and of the blade (27) so that, between other phases and after the tubes (T1, T2) have been cut by the blade (27), the transverse movement of one pair of jaws brings the tubes (T1, T2) that are to be connected into the continuation of one another, in which apparatus each pair of jaws (42, 43) is mounted on a carriage (29, 31) which can move freely along longitudinal slide rails (28, 32) of a frame (9, 33) and is subjected to the action of springs (30, 34) working in extension, pushing it towards at least one retractable stop (35, 36, 37, 38) borne by the frame of the other carriage (29, 31) whereas, on the one hand, the frame (9) of at least one of the carriages (29) is itself mounted so that it can slide on transverse slide rails (8) borne by the frame (2) of the apparatus and is connected to the drive means (10) able to move it along these slide rails (8) between a starting position, in which the pairs of jaws (42, 43) are aligned, and a connecting position, in which the pairs of jaws are offset and the retractable stops (35, 36, 37, 38) are retracted, and, on the other hand, the heated blade (27) is borne by a carriage (22) which can be moved, in both directions and by drive means (19), along vertical slide rails (20) of the frame of the apparatus, said carriage (22) bearing a vertical wedge-shaped cam (52) the two lateral edges of which are profiled and each collaborate, when the retractable stops (35, 36, 37, 38) have been retracted and while the heated blade (27) is being raised again, with a follower of horizontal axis (49, 51) mounted on the corresponding longitudinal carriage (29, 31) to control the travel and the butting-together forces of the tubes (T1, T2).

5. Apparatus according to Claim 4, **characterized in that** each pair of jaws (42, 43) is removable and is made up of a lower jaw (42) and an upper jaw (43) each comprising:
- two longitudinal and spaced-apart channels (44) of open semi-cylindrical cross section,
- complementary positioning means,
- and, against its face facing the other pair of jaws, a vertical plate (41) made of non-stick material partially closing off the opening of the longitudinal channels (44) to form an anvil for flattening the tubes (T1, T2).

6. Apparatus according to Claim 4, **characterized in that** at least the lower part of the heated blade (27) is subjected, by means inserted between its ends (27a, 27b) and the corresponding ends (25a, 25b) of a stirrup-shaped support (26), to opposed longitudinal forces which keep its active edge (27c) straight during the melt-cutting of the tubes (T1, T2).

7. Apparatus according to Claim 6, **characterized in that** the heated blade (27) is fixed by its posterior vertical edge (27a) on the posterior upright (25a) of the support stirrup (26) and is secured, by its anterior vertical edge (27b), to a vertical strip (58), while the means which exert a tensile longitudinal force on it comprise at least two threaded members (59) the heads of which rest against the strip (58) and the threaded shanks of which, which pass through the strip (58) and the anterior upright (25b) of the stirrup (26), are screwed into nuts (61) resting on said upright (27b).

8. Apparatus according to Claim 6, **characterized in that** the heated blade (27) is formed of a metal tape bent into a U shape, the web of which constitutes the active edge (27c) and the gap between the flanges of which contains a heat-energy-generating means (62) which is controlled by thermostatic means (65) arranged in a slot (64) passing through the blade (27), while the external faces of the blade are coated with a non-stick coating (63).

9. Apparatus according to Claim 6, **characterized in that** the support stirrup (26) bearing the blade (27) is mounted removably on the blade carriage (22).

10. Apparatus according to Claim 4, **characterized in that**, when the heated blade (27) is at the end of its downstroke, the distance (L1) between the two profiled lateral edges of the wedge-shaped vertical cam (52), measured in the horizontal plane containing the axes of the two horizontal followers (49, 51) is less than the distance (L2) between these followers.

11. Apparatus according to Claim 4, **characterized in that** the vertical cam (52) is mounted removably on the blade carriage (22).

12. Apparatus according to Claim 4, **characterized in that** each retractable stop is made up of:
- on the one hand, a horizontal stop blade (35, 36) connected to the corresponding frame (9, 33), said stop blade having a flat transverse face (35a, 36a), a retraction ramp (35b, 36b) and extending over a length at least equal to the travel of the transversely movable jaws,
- and, on the other hand, of a follower (37, 38) of vertical axis, mounted to rotate freely on a support (39, 40) secured to the corresponding carriage (31, 29) and projecting from this carriage towards the stop blade (35, 36) facing it.
